# EUROPEAN PATENT APPLICATION

(11) **EP 2 026 558 A1**
(43) Date of publication of application: **18.02.2009**
(21) Application number: 07252990.2
(22) Date of filing: 30.07.2007
(51) Int. Cl.: H04N 5/00, H04N 5/44

(54) **Transport stream module for digital television receiver**

(71) Applicant: SONY UNITED KINGDOM LIMITED, Weybridge, Surrey KT13 0XW (GB)
(72) Inventor: Londero, Mark, Hampshire GU34 5BP (GB)
(74) Representative: Merryweather, Colin Henry

(57) **Abstract**

A module is connected to a digital television decoder apparatus by a transport stream interface over which the module supplies a transport stream received in the module over the transport stream interface or over a separate interface. The module has a packet multiplexer arranged to multiplex packets containing application data generated in the module into the received transport stream. This allows the module to implement a man-machine interface.

## Description

The present invention relates generally to digital television, and the reception and decoding of transport streams.

Digital television signals are generally broadcast or otherwise delivered as transport streams comprising multiplexed packets containing video and audio signals. The video signals in the video packets are encoded to achieve compression and reduce the required bandwidth. To produce a video signal for display on a display device, a digital television receiver included in a reception apparatus such as a television, or a set-top box includes a decoder for decoding the compressed video packets which are received.

There a variety of modes of delivery of digital television signals, for example in a terrestrial broadcast, in a satellite broadcast, over a dedicated cable, or over a network. Furthermore a variety of signal formats are used, for example using different compression schemes. This makes it difficult for a single digital television receiver to accommodate all possible modes of delivery and signal formats which might be encountered at the time of design or in the future. One technique for dealing with this issue is to provide a module for connection to a digital television decoder apparatus by a transport stream interface over which the module supplies a received transport stream to the digital television decoder apparatus. The module may have additional or different functionality from the digital television decoder apparatus which allows the reception or processing of modes of delivery or formats of digital television signals which cannot be handled by the digital television decoder apparatus. Thus the module adapts a legacy digital television decoder apparatus to new modes of delivery or formats.

As an example, this type of module may conform with the DVB-CI (Digital Video Broadcasting - Common Interface) standard (CENELEC EN50221) or with the CableCARD standard, typically including a connector conforming with the PCMCIA standard. This allows the module to be connected to the PCMCIA slot which is commonly provided on a reception apparatus for receiving a radio frequency or satellite broadcast, for example a digital television or a set-top box. Such a PCMCIA slot is provided with the main purpose of implementing the DVB-CI standard to allow the connection of a conditional access module (CAM) which can descramble (or decrypt) scrambled (or encrypted) content streams. In accordance with the DVB-CI standard or the CableCARD standard, the module includes a transport stream interface through which transport streams are input and output. The input transport stream is received by the reception circuit of the reception apparatus to which the module is connected through the transport stream interface and then passed to the module. The module may then process the transport stream and return it to the reception apparatus.

With such a module, there exists a problem in implementing a man-machine interface to allow control of the operation of the module. The control might be expected to be implemented over the interface. For example, the DVB-CI standard includes a command interface being a bi-directional interface through which commands may be passed for control of the module by the user. However, such an interface has a limited bandwidth. For example, the command interface of the DVB-CI standard has only an 8-bit width and uses a slow push-pull style transfer protocol. These characteristics and the limited polling and buffering resources provided by most implementations of the command interface constrain the bandwidth. This in turn limits the speed of any interaction between the module and the host reception apparatus. In practice, this slow communication limits the effectiveness of applications on the module which utilise the command interface to provide interactivity with the user. The DVB-CI standard includes two MMI modes in which the module can utilise MMI resources on the reception apparatus to present an on-screen display on the video images of the uncompressed video stream output by the decoder in the reception apparatus. In particular when implementing the low-level MMI mode which provides the module with detailed control over the look of the on-screen display, the slow speed of communication over the command interface is a bottleneck which severely degrades the performance of the MMI as perceived by a user. In practical terms, this severely limits the ability to provide rich interactive services to the user, contrary to the trend that technological advances increase interactivity in the broadcast and transmission of video streams.

According to a first aspect of the present invention, there is provided a module for supplying a transport stream to a digital television decoder apparatus, the module being capable of receiving transport streams comprising multiplexed packets containing video and audio signals, the module comprising:
a packet multiplexer arranged to multiplex packets containing application data generated in the module into a received transport stream; and
a transport stream interface capable of connection to a digital television decoder apparatus and of supplying a transport stream to the digital television decoder apparatus, the module being arranged to supply a transport stream output from the packet multiplexor to the transport stream interface.

Operation of the packet multiplexer allows packets containing application data generated in the module to be multiplexed into a received transport stream. This allows the transfer of application data to the digital television decoder apparatus over the transport stream interface as part of the transport stream. This allows the module to communicate with the digital television decoder apparatus without the need to use another interface such as a command interface. Generally the transmission of packets within the transport stream will provide a significantly greater bandwidth than the use of such a command interface, thereby overcoming the major drawback of such a command interface presenting a communications bottleneck.

By way of example the application data may be data of an interactive television application. For example, the application data may be in accordance with one of the MHEG standard, the MHP standard, the OpenTV standard, or the CE-HTML standard. Thus the application data may be used to provide an on-screen display such as an electronic programme guide. This may be used to control the operation of the module of the basis of commands indicating user-inputs being supplied to the module, so as to implement a man-machine interface.

The packets containing application data may be multiplexed in accordance with the standard with which the transport stream accords, for example the DVB standard. In such cases, packets containing application data of an interactive television application are sometimes included in a broadcast transport stream, to allow a digital television decoder apparatus to implement an interactive television service such as a simple electronic programme guide or a richer service providing selection of the displayed image. However, the present invention may use equivalent application data but inserted by a module connected to a digital television decoder apparatus to provide additional functionality to the module.

The module itself may take a variety of forms and provide a variety of functionality. By way of example, the transport stream interface may be in accordance with the DVB-CI standard or the CableCARD standard and may incorporate any suitable physical connector, for example in accordance with the PCMCIA standard or the USB standard.

The received transport stream into which the packets containing application data may be received from a variety of sources. Some examples are as follows.

In one example, the transport stream may be received through the transport stream interface. In this case, the module may be connected to a digital television decoder apparatus which is also a reception apparatus containing a receiver circuit for receiving a broadcast transport stream, for example a television, a recording apparatus, or a set-top box which includes a reception circuit for receiving a video stream from a radio frequency broadcast or a satellite broadcast. In this case, the transport stream is received by the reception circuit of the reception apparatus and passed to the module through the transport stream interface.

However the module may equally be applied to systems which receive transport streams themselves. This may be the case, for example, when the module has the purpose of handling a transport stream having a mode of delivery which the digital television decoder apparatus cannot handle. An important example is that the module may comprise a network interface for receiving data over a data network, the transport stream being received through the network interface. In such a case, the data network may be any wired network or a wireless network, for example implementing the Internet Protocol (IP) standard, so that the transcoder device may implement a receiver for IP-TV, or being a wireless local area network, for example Wi-Fi. Another example is that the module includes a receiver circuit capable of receiving a broadcast television signal and extracting therefrom a transport stream.

The module may provide a variety of functionality. For example, besides allowing reception from different sources, the module may include a transcoder circuit which performs transcoding of the received transport stream from an encoding in accordance with a first encoding scheme into an encoding in accordance with a second, different encoding scheme, eg from MPEG-2 to MPEG-4. Additionally or alternatively, the module may include a decryption circuit arranged to perform decryption of the received transport stream.

According to further aspects of the present invention, there may be provided methods corresponding to the operation of the apparatuses in accordance with the first and second aspects, and also corresponding computer programs.

To allow better understanding, embodiments of the present invention will now be described by way of non-limitative example with reference to the accompanying drawings, in which:
Fig. 1 is a diagram of a television apparatus having a DVB-CI module which is a transcoder device connected thereto;
Fig. 2 is a diagram of the internal arrangement of the DVB-CI module of Fig. 1;
Fig. 3 is a diagram of a system for receiving IPTV and supplying it to the module and television apparatus of Fig. 1; and
Fig. 4 is a diagram of the internal arrangement of the DVB-CI module of Fig. 1 in an alternative implementation.

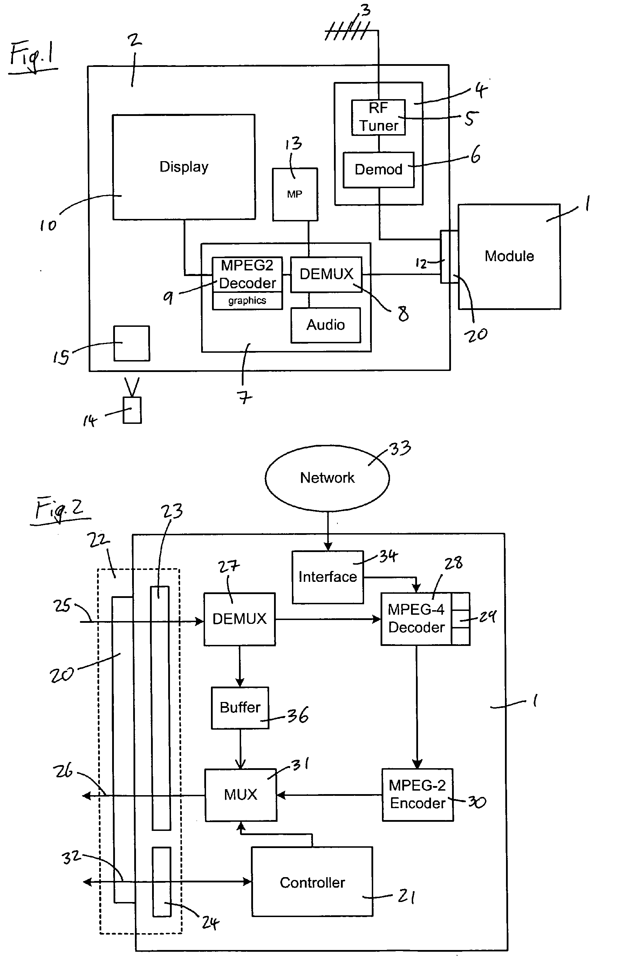

Fig. 1 shows a module 1 which is in this example is a transcoder device connected to a television apparatus 2 which is a receiver-decoder apparatus incorporating a receiver circuit 4 for receiving a broadcast television signal and a decoding circuit 7 for decoding the broadcast television signal. The television apparatus 2 includes a controller 13 which controls the operation of the television apparatus 2. The controller 13 may be implemented by a microprocessor running an appropriate program.

The television apparatus 2 is connected to an external antenna 3 in a conventional manner. The television apparatus 2 has a receiver circuit 4 which is supplied with a radio frequency television broadcast signal received by the antenna 3. Alternatively, the reception apparatus 2 could receive a broadcast television signal having a different mode of delivery from a radio frequency broadcast, for example a satellite broadcast, over a dedicated cable, or over a data network.

The broadcast signal is in accordance with the DVB standard (although in general any format can be used) and contains transport streams modulated onto a radio frequency carrier signal. The transport streams may contain high definition (HD) video streams.

The receiver circuit 4 comprises an RF tuner 5 which extracts the desired broadcast signal and a demodulator 6 which demodulates the broadcast signal to extract a multiplexed signal of a single broadcast channel. As is conventional for broadcast digital television, each broadcast channel carries a multiplexed signal in which a plurality of transport streams, each comprising packets containing associated video and audio signals, are multiplexed together. Each transport stream represents a television "channel" as understood by a user, commonly referred to as a service in the context of DVB. The transport stream may also include packets of application data being data of an interactive television application, for example in accordance with any of the MHEG standard, the MHP standard, the OpenTV standard, the CE-HTML standard or the like.

The television apparatus 2 has a decoding circuit 7 including a demultiplexer 8 capable of extracting an individual transport stream from a received multiplexed signal. In the case that the multiplexed signal output by the receiver circuit 4 is encoded in accordance with the MPEG-2 standard, this multiplexed signal is supplied directly to the decoding circuit 7.

The video packets of the transport stream extracted by the demultiplexer 8 are supplied to an MPEG-2 decoder 9 which decodes the video signal contained in the video packets in accordance with the MPEG-2 standard. The MPEG-2 decoder 9 outputs an uncompressed video stream which is supplied to a display device 10 which displays the video images of the video stream.

The audio packets of the transport stream extracted by the demultiplexer 8 are supplied to an audio circuit 14 which decodes the audio signal to provide an audio signal for driving a loudspeaker (not shown).

The packets of application data in the transport stream extracted by the demultiplexer 8 are supplied to the controller 13. The controller 13 interprets the application data in accordance with interactive television application and controls the operation of the television apparatus 2 on the basis of the application data.

For example, the application data may specify the content of an on-screen display, in which case the controller 2 can cause the on-screen display to be displayed on the display device 10. To achieve this, the MPEG-2 decoder 9 may incorporate a graphics generator 13 which, under the control of the controller 13, generates a video signal representing the on-screen display, which video signal is supplied to the display device 10.

Such an on-screen display may form part of the implementation of a man-machine interface (MMI) for the television apparatus 2. In particular, the on-screen display may provide options to the user. For example, the on-screen display might include an electronic program guide (EPG) indicating programs or might include a menu of settings for the operation of the module 1. To further implement the MMI, the controller 13 causes the television apparatus 2 to accept inputs from a user, typically inputs from an infrared (IR) remote control unit 14 received at an at an infrared (IR) receiver 15 of the television apparatus. Responsive to user-inputs, the the controller 13 controls the operation of the television apparatus 2 to implement the MMI. For example, where the MMI includes the display of an EPG, the user-inputs may indicate a selection of a particular program and, in response thereto, the controller 13 may control the operation of the demultiplexer 8 to extract the transport stream of the selected program.

The application data may specify an interactive service, for example allowing the user to select alternative content.

As the television apparatus 2 is legacy equipment, the MPEG-2 decoder 9 is capable of decoding an MPEG-2 video signal but is not capable of decoding an MPEG-4 video signal. Accordingly, the television apparatus 2 by itself is incapable of receiving broadcast signals containing video signals encoded in accordance with the MPEG-4 standard (which is a first encoding scheme in this example). The module 1 adapts the television apparatus to solve this problem as follows.

The module 1 conforms with the DVB-CI standard, although as an alternative could conform with the CableCARD standard. Accordingly, the module 1 has a connector 20 in accordance with the PCMCIA standard to allow it to connect to a slot 12 in accordance with the PCMCIA standard provided on the television apparatus 2. In order to allow connection of a Conditional Access Module (CAM) which can descramble scrambled video streams, it is very common for a television apparatus, and indeed for other types of reception apparatus, to be provided with an interface in accordance with the DVB-CI standard and including a slot in accordance with the PCMCIA standard. DVB-CI stands for Digital Video Broadcasting-Common Interface.

Fig. 2 shows the arrangement of the module 1. The module 1 includes a controller 21 which controls the operation of the components of the module 1. The controller 21 is implemented by a microprocessor running an appropriate program. In accordance with the DVB-CI standard, the module 1 further includes a DVB-CI interface 22 incorporating a transport stream interface 23 and a command interface 24 which both use the connector 20 as the physical layer. As an alternative the connector 20 and slot 12 could be in accordance with the USB standard.

The transport stream interface 21 receives an input multiplexed signal 25 and transmits an output multiplexed signal 26. In the case that the multiplexed signal output by the receiver circuit 4 of the television apparatus 2 is encoded in accordance with the MPEG-2 standard, the television apparatus 2 supplies the multiplexed signal from the receiver circuit 4 to the module 1 as the input multiplexed signal 25 and similarly supplies the output multiplexed signal 26 to the MPEG-2 decoding circuit 7.

The module 1 has a demultiplexer 27 which is supplied with the input multiplexed signal 25. The demultiplexer 27 demultiplexes the input multiplexed signal 25 and extracts the video stream (ie the video packets) of one of the transport streams which contains the video signal to be displayed on the display device 10.

The extracted video stream is supplied to an MPEG-4 decoder 28 which performs decoding in accordance with the MPEG-4 standard to produce an uncompressed video stream. The MPEG-4 decoder 28 includes a number of frame buffers 29 to store frames of the compressed and uncompressed video streams as needed to perform decoding.

The uncompressed video stream is supplied from the MPEG-4 decoder 28 to an MPEG-2 encoder 30 which performs encoding of the uncompressed video stream in accordance with the MPEG-2 standard. Accordingly, the MPEG-4 decoder 28 and the MPEG-2 encoder 30 together perform transcoding, so the module 1 operates as a transcoding device and produces a transcoded video stream.

The MPEG-2 encoder 30 may encode the transcoded video stream as a succession of I-frames only. I-frames are frames which contain spatial information of only a single video frame. By not using P-frames and B-frames which are predictive frames referring to video frames other than the current one, the buffering requirement of the MPEG-2 encoder 30 is significantly reduced and both the complexity and cost of the module 1 are correspondingly reduced. This is possible, because the hardwired connections through the transport stream interface 21 to the MPEG-2 decoder circuit 9 of the television apparatus 2 have a sufficiently high bandwidth to accommodate the transcoded video stream without any P-frames or B-frames. That being said, in other implementations the MPEG-2 encoder 30 could include P-frames and B-frames in the transcoded video stream.

As an alternative the MPEG-4 decoder and MPEG-2 encoder could be replaced by a transcoder which does not fully decode the MPEG-4 video stream. Instead, the transcoder could, for example, unpack the MPEG-4 video stream to a level which is convertible into an MPEG-2 video stream (e.g. down to a motion vector level).

The module 1 has a multiplexer 31 which is supplied with the transcoded video stream from the MPEG-2 encoder 30. The multiplexer 31 is also supplied with the input multiplexed signal 25, through a buffer 36 which is used to synchronise the signals received at the multiplexer 31. The multiplexer 31 is arranged to multiplex the transcoded video stream into the input multiplex signal 25 in place of the video stream extracted by the demultiplexer 27. The resultant effect is that the input video stream encoded in accordance with the MPEG-4 standard is replaced by the signal representing the same video images but encoded in accordance with the MPEG-2 standard. The multiplexed signal output by the multiplexer 31 is supplied as the output multiplexed signal 26 through the transport stream interface 23.

In addition, the multiplexer 31 is used to multiplex packets containing application data generated in the module 1 into the output multiplexed signal 26. The application data is generated by the controller 21 and is data of an interactive television application, for example in accordance with any of the MHEG standard, the MHP standard, the OpenTV standard, the CE-HTML standard or the like. Such application data is commonly incorporated in a broadcast multiplex signal, as described above. However, in this case, the application data is instead generated locally in the module 21 by the controller 21.

In the television apparatus 2, the application data is extracted by the demultiplexer 8 and interpreted by the controller 13 in accordance with interactive television application as described above, that is in exactly the same manner as application data which has been broadcast. Thus the operation of the television apparatus 2 is controlled on the basis of the application data generated in the module 1. This allows the module 1 to provide any type of interactive service of which the interactive television application is capable.

For example, the application data may specify the content of an on-screen display, in which case the controller 12 can cause the on-screen display to be displayed on the display device 10, using the graphics generator 13, as described above. Such an on-screen display may form part of the implementation of a man-machine interface (MMI) for the operation of the television apparatus 2, as well as the television apparatus 2. In particular, the on-screen display may provide options to the user. For example, the on-screen display might include an electronic program guide (EPG) indicating programs or might include a menu of settings for the operation of the module 1.

To further implement the MMI, the application data may cause the television apparatus 2 to accept inputs from a user, and, responsive to those user-inputs, the controller 13 controls the operation of the television apparatus 2 to implement the MMI. For example, where the MMI includes the display of an EPG, the user-inputs may indicate a selection of a particular program and, in response thereto, to cause the television apparatus 2 to transmit commands 32 indicating the user-inputs to the module 1 through the command interface 24. Such commands 32 are received by the controller 21. Responsive to the commands, the controller 21 controls the operation of the module to implement the MMI. For example, where the MMI includes the display of an EPG, the user-inputs may indicate a selection of a particular program and, in response thereto, the controller 21 may control the operation of the demultiplexer 27 to extract the video stream of the program from the input multiplexed signal 25 as the video stream which is transcoded.

As the controller 21 generates the application data, the invention may be implemented as a software upgrade to an existing module 1, for example an existing module 1 which already includes the other components illustrated in Fig. 2. The software upgrade may be stored on a computer-readable storage medium such as a memory or transmitted over a network during which transmission it is represented by a carrier wave.

As described above, the module 1 transcodes compressed video streams of transport streams which are supplied as part of a radio frequency broadcast signal received by the receiver circuit 4 of the television apparatus 2. Alternatively or additionally, the module 1 may transcode video streams of transport streams transmitted through a data network 33. To facilitate this, the module 1 includes a network interface 34 arranged to receive data over the data network 33 to extract a transport stream which is supplied as the input video stream to the MPEG-4 decoder 28 from where it is processed as described above. The network 33 and the corresponding network interface 34 may be of any type including a wired network or a wireless network. The network interface 33 may include a stack of protocols to handle data transmitted over the data network 33 in different formats.

An important example is that the network 33 is the internet. In this case, the network interface 34 includes protocols such as TCP/IP for receiving video streams over the internet. This example allows the module 1 to receive IP-TV.

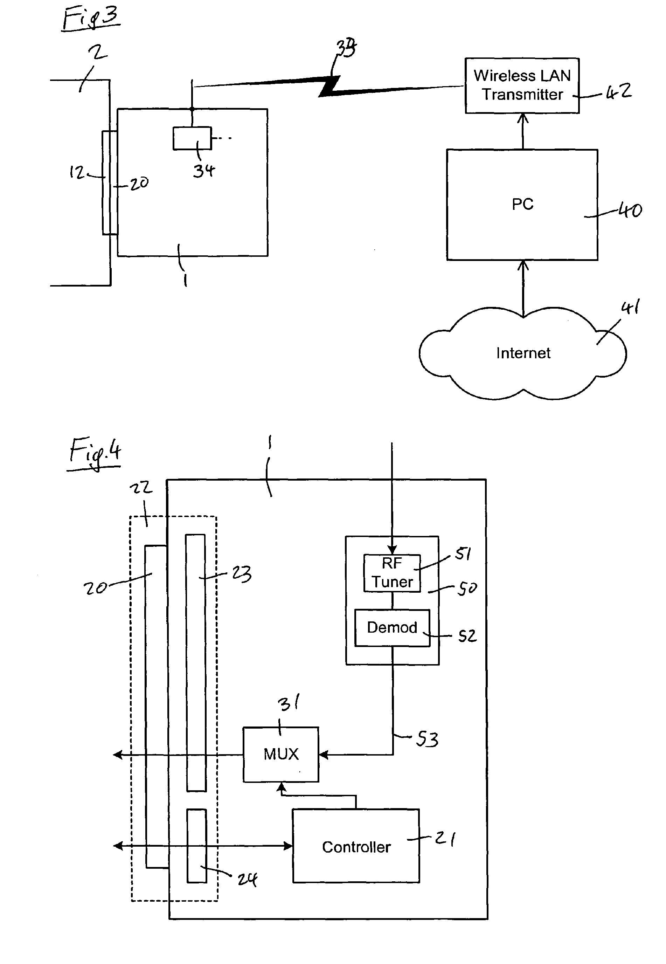

Another important example of the network 33 is a wireless local area network (LAN) such as Wi-Fi. Fig. 3 shows a system for receiving IP-TV in which the network 33 is such a wireless LAN. In this system, a computer 40 receives a transport stream transmitted over the internet 41 as an IP-TV transmission. The computer 40 passes the transport stream to a wireless LAN transmitter 42 which transmits the transport stream over the wireless LAN 33. In this case, the module 1 has an antenna 35 which receives the video stream from the wireless LAN 33 and passes it to the network interface 34 which includes a protocol for the wireless LAN 33.

These implementations of the module 1 are useful because they adapt the television apparatus 2 to receive IP-TV. If the transport stream is encoded in accordance with the MPEG-2 standard (or indeed in any format which can be handled by the television apparatus 2), then the module 1 might not be provided with a transcoding function. In that case, the MPEG-4 decoder 28 and the MPEG-2 encoder 30 may be omitted, the received transport stream instead being supplied directly from the network interface 34 to the multiplexer 31.

An alternative implementation of the module 1 is shown in Fig. 4, wherein components in common with the implementation shown in Fig. 1 are given the same reference numerals. In this case, the module 1 is adapted to act as a reception apparatus for receiving a broadcast television signal. In this case, the module 1 includes a receiver circuit 50 which is supplied with a broadcast television signal. In general the broadcast signal could be delivered to the module 1 over any mode, for example using a radio frequency broadcast signal, using a satellite broadcast signal, or over a dedicated cable. The module 1 is particularly useful where the receiver circuit 50 is supplied with a broadcast television signal over a mode of delivery which cannot be handled by the television apparatus 2, so that the module 1 adapts the television apparatus 2 to receive broadcast television signals in a new mode.

The receiver circuit 50 comprises an RF tuner 51 which extracts the desired broadcast signal and a demodulator 52 which demodulates the broadcast signal to extract a multiplexed signal 53 of a single broadcast channel containing plural transport streams. This multiplexed signal is supplied to the multiplexer 31 which is used to multiplex packets containing application data generated in the module 1 by the controller 21 into the multiplexed signal 53 as described above. The multiplexed signal 53 is supplied from the multiplexer 31 to the television apparatus 2 through the transport stream interface 23 of the DVB-CI interface 22 which has the same arrangement as described above.

Of course, the embodiments described above are merely examples of the present invention and numerous variations and alternatives are possible, including (but not limited to) the following.

Whilst the module 1 of Fig. 1 relates to an implementation in which the first encoding scheme is MPEG-4 and the second encoding scheme is MPEG-2, in general the first and second encoding schemes could be any encoding schemes. In typical implementation, the first encoding scheme will have a higher compression ratio than the second encoding scheme, but this is not essential.

The module 1 may have additional or alternative functionality. For example the module 1 may optionally include a decryption circuit 60, shown in dotted outline in Figs. 1 and 4 which performs decryption of the transport stream.

The television apparatus 2 in the above example is a type of reception apparatus. In general, the module 1 could be connected to any other type of television decoding apparatus, including: an apparatus without a display device (e.g. a set-top box); an apparatus having a recording device (e.g. a DVD recording drive or a hard drive); or an apparatus without a reception circuit 4.

## Claims

1. A module for supplying a transport stream to a digital television decoder apparatus, the module being capable of receiving transport streams comprising multiplexed packets containing video and audio signals, the module comprising:
a packet multiplexer arranged to multiplex packets containing application data generated in the module into a received transport stream; and
a transport stream interface capable of connection to a digital television decoder apparatus and of supplying a transport stream to the digital television decoder apparatus, the module being arranged to supply a transport stream output from the packet multiplexor to the transport stream interface.

2. A module wherein the application data is data of an interactive television application.

3. A module according to claims 1 or 2 wherein the application data is in accordance with any one of: the MHEG standard, the MHP standard, the OpenTV standard, or the CE-HTML standard.

4. A module according to any one of the preceding claims, wherein the module includes a controller arranged to control the operation of the module, and is capable of receiving commands indicating user-inputs, the controller being arranged to generate said application data for providing an on-screen display and to control the operation of the module in response to the commands, so as to implement a man-machine interface.

5. A module wherein the on-screen display includes an electronic programme guide, and the controller is arranged to generate said application data for providing an on-screen display and to control the operation of the module in response to the commands, so as to implement a man-machine interface allowing the user to select a video stream.

6. A module according to any one of the preceding claims wherein the module is capable of receiving transport streams in accordance with the DVB standard and the packet multiplexer is arranged to multiplex said packets containing said application data into a received transport stream in accordance with the DVB standard.

7. A module according to any one of the preceding claims wherein the transport stream interface is in accordance with the DVB-CI standard.

8. A module according to any one of claims 1 to 6 wherein the transport stream interface is in accordance with the CableCARD standard.

9. A module according to any one of the preceding claims wherein the transport stream interface includes a connector in accordance with the PCMCIA standard or in accordance with the USB standard.

10. A module according to any one of the preceding claims wherein the module further comprises a command interface capable of connection to the digital television decoder apparatus and through which the module is capable of communicating with the digital television decoder apparatus.

11. A module according to any one of the preceding claims wherein said received transport stream is one of plural transport streams multiplexed together in a multiplexed signal.

12. A module according to any one of the preceding claims wherein the module is capable of receiving transport streams through the transport stream interface and is arranged to supply a transport stream received through the transport stream interface to the packet multiplexer.

13. A module according to any one of the preceding claims or further comprising a network interface for receiving data over a data network, the module being capable of receiving transport streams through the network interface and being arranged to supply a transport stream received through the network interface to the packet multiplexer.

14. A module according to claim 13 wherein the data network is a wired network or a wireless network.

15. A module according to claim 13 wherein the network interface implements the Internet Protocol standard.

16. A module according to claim 13 wherein the data network is a wireless local area network.

17. A module according to any one of the preceding claims further comprising a receiver circuit capable of receiving a broadcast television signal and extracting therefrom a transport stream, the module being arranged to supply a transport stream extracted by the receiver circuit to the packet multiplexer.

18. A module according to any one of the preceding claims further comprising a transcoder circuit arranged to perform transcoding of the received transport stream from an encoding in accordance with a first encoding scheme into an encoding in accordance with a second, different encoding scheme.

19. A module according to claim 18 wherein the second encoding scheme has a higher compression ratio than the first encoding scheme.

20. A module according to claims 18 or 19 wherein the input video stream is a high definition video steam and the output video stream is a standard definition video stream.

21. A module according to any one of claims 18 to 20 wherein the second encoding scheme is MPEG-2.

22. A module according to any one of claims 18 to 21 wherein the first encoding scheme is MPEG-4.

23. A module according to any one of the preceding claims further comprising a decryption circuit arranged to perform decryption of the received transport stream.

24. A module according to any one of the preceding claims in combination with the digital television decoder apparatus.

25. A module according to claim 24 wherein the digital television apparatus further comprises a display device.

26. A method of operating a module for supplying a transport stream to a digital television apparatus, the module being capable of receiving transport streams comprising multiplexed packets containing video and audio signals, and comprising a transport stream interface capable of connection to a digital television apparatus and of supplying a transport stream to the digital television apparatus, the method comprising:
multiplexing packets containing application data generated in the module into a received transport stream; and
supplying a transport stream output from said multiplexing to the transport stream interface.

27. A computer program capable of operation by a module for supplying a transport stream to a digital television apparatus, the module being capable of receiving transport streams comprising multiplexed packets containing video and audio signals, and comprising a transport stream interface capable of connection to a digital television apparatus and of supplying a transport stream to the digital television apparatus, the computer program being capable on execution of causing the module to operate in accordance with claim 26.

28. A computer-readable storage medium storing a computer program according to claim 26.

29. A carrier wave representing a computer program according to claim 26.

## Amended claims

### Amended claims in accordance with Rule 137(2) EPC.

**1.** A module (1) for supplying a transport stream to a digital television decoder apparatus (2), the module (1) being capable of receiving transport streams comprising multiplexed packets containing video and audio signals, the module comprising:
a packet multiplexer (31) arranged to multiplex packets containing application data generated in the module (1) into a received transport stream; and
a transport stream interface (23) capable of connection to a digital television decoder apparatus (2) and of supplying a transport stream to the digital television decoder apparatus (2), the module (1) being arranged to supply a transport stream output from the packet multiplexer (31) to the transport stream interface (23).

**2.** A module according to claim 1, wherein the application data is data of an interactive television application.

**3.** A module according to claims 1 or 2, wherein the application data is in accordance with any one of: the MHEG standard, the MHP standard, the OpenTV standard, or the CE-HTML standard.

**4.** A module according to any one of the preceding claims, wherein the module (1) includes a controller (21) arranged to control the operation of the module (1), and the module (1) is capable of receiving commands indicating user-inputs, the controller (21) being arranged to generate said application data for providing an on-screen display and to control the operation of the module (1) in response to the commands, so as to implement a man-machine interface.

**5.** A module according to any one of the preceding claims, wherein the on-screen display includes an electronic programme guide, and the controller (21) is arranged to generate said application data for providing an on-screen display and to control the operation of the module in response to the commands, so as to implement a man-machine interface allowing the user to select a video stream.

**6.** A module according to any one of the preceding claims, wherein the module (1) is capable of receiving transport streams in accordance with the DVB standard and the packet multiplexer is arranged to multiplex said packets containing said application data into a received transport stream in accordance with the DVB standard.

**7.** A module according to any one of the preceding claims, wherein the transport stream interface (23) is in accordance with the DVB-CI standard.

**8.** A module according to any one of claims 1 to 6, wherein the transport stream interface (23) is in accordance with the CableCARD standard.

**9.** A module according to any one of the preceding claims, wherein the transport stream interface (23) includes a connector (20) in accordance with the PCMCIA standard or in accordance with the USB standard.

**10.** A module according to any one of the preceding claims, wherein the module (1) further comprises a command interface (24) capable of connection to the digital television decoder apparatus (2) and through which the module (1) is capable of communicating with the digital television decoder apparatus.

**11.** A module according to any one of the preceding claims, wherein said received transport stream is one of plural transport streams multiplexed together in a multiplexed signal.

**12.** A module according to any one of the preceding claims, wherein the module (1) is capable of receiving transport streams through the transport stream interface (23) and is arranged to supply a transport stream received through the transport stream interface (23) to the packet multiplexer (31).

**13.** A module according to any one of the preceding claims, further comprising a network interface (34) for receiving data over a data network (33), the module being capable of receiving transport streams through the network interface (34) and being arranged to supply a transport stream received through the network interface (34) to the packet multiplexer (31).

**14.** A module according to claim 13, wherein the data network (33) is a wired network or a wireless network.

**15.** A module according to claim 13, wherein the network interface (34) implements the Internet Protocol standard.

**16.** A module according to claim 13, wherein the data network (3) is a wireless local area network.

**17.** A module according to any one of the preceding claims, further comprising a receiver circuit (50) capable of receiving a broadcast television signal and extracting therefrom a transport stream, the module (1) being arranged to supply a transport stream extracted by the receiver circuit (50) to the packet multiplexer (31).

**18.** A module according to any one of the preceding claims, further comprising a transcoder circuit (28, 30) arranged to perform transcoding of the received transport stream from an encoding in accordance with a first encoding scheme into an encoding in accordance with a second, different encoding scheme.

**19.** A module according to claim 18, wherein the second encoding scheme has a higher compression ratio than the first encoding scheme.

**20.** A module according to claims 18 or 19, wherein the input video stream is a high definition video steam and the output video stream is a standard definition video stream.

**21.** A module according to any one of claims 18 to 20, wherein the second encoding scheme is MPEG-2.

**22.** A module according to any one of claims 18 to 21, wherein the first encoding scheme is MPEG-4.

**23.** A module according to any one of the preceding claims, further comprising a decryption circuit arranged to perform decryption of the received transport stream.

**24.** A module according to any one of the preceding claims, in combination with the digital television decoder apparatus (2).

**25.** A module according to claim 24 wherein the digital television apparatus (2) further comprises a display device (10).

**26.** A method of operating a module (1) for supplying a transport stream to a digital television apparatus (2), the module (1) being capable of receiving transport streams comprising multiplexed packets containing video and audio signals, and comprising a transport stream interface (23) capable of connection to a digital television apparatus (2) and of supplying a transport stream to the digital television apparatus (2), the method comprising:
multiplexing packets containing application data generated in the module (1) into a received transport stream; and
supplying a transport stream output from said multiplexing to the transport stream interface (23).

**27.** A computer program capable of operation by a module (1) for supplying a transport stream to a digital television apparatus (2), the module (1) being capable of receiving transport streams comprising multiplexed packets containing video and audio signals, and comprising a transport stream interface (23) capable of connection to a digital television apparatus (2) and of supplying a transport stream to the digital television apparatus (2), the computer program being capable on execution of causing the module (1) to operate in accordance with claim 26.

**28.** A computer-readable storage medium storing a computer program according to claim 27.

**29.** A carrier wave representing a computer program according to claim 27.
